# EUROPEAN PATENT APPLICATION

(11) **EP 3 974 698 A1**
(43) Date of publication of application: **30.03.2022**
(21) Application number: 20198919.1
(22) Date of filing: 29.09.2020
(51) Int. Cl.: F16M 11/04, F16M 13/02, F16M 11/08, F16M 11/20, F16M 11/24, H04M 1/04, F16M 13/04

(54) **ELECTRONIC PRODUCT FIXING DEVICE CAPABLE OF FAST BUCKLING AND PICKING**

(71) Applicant: Shenzhen ZhiYuanTongTai Technology Co., Ltd, Shenzhen City, Guangdong (CN)
(72) Inventor: QI, Haibo, Shenzhen City, Guangdong (CN)
(74) Representative: Cabinet Chaillot

(57) **Abstract**

The invention discloses an electronic product fixing device capable of fast buckling and picking, comprising a buckle clip, wherein the buckle clip comprises a housing, two movable buckles, a first spring, a transmission member, and a button; the movable buckles and the transmission member are movably installed in the housing; a clamping space for clamping a finger ring bracket is formed between the two movable buckles; the transmission member is perpendicular to one side edge of the movable buckles to form a slot with inclined guide surfaces on the left and right sides; the first end of the movable buckles matches the shape of the slot and can be stuck in the slot; the second end of each movable buckle is installed with a first spring; the first end of the transmission member parallel to the movable buckles is provided with a second spring; the second end of the transmission member parallel to the movable buckles is provided with the button, and the button is movably arranged in the mounting hole of the housing. The invention can not only be used in conjunction with sports products when people go out for exercise, but also can be used as a mobile phone ring in daily life.

## Description

### FIELD OF THE INVENTION

The invention relates to the field of mobile phone accessories, in particular to an electronic product fixing device capable of fast buckling and picking.

### BACKGROUND OF THE RELATED ART

The existing electronic product fixing devices on the market do not have the functions of convenient and simple operation, stable hooking in one second, and easy removal with one button. For example: the device of magnetic method has no hook, and the buckle is unstable and easy to fall and break; the device clamped on both sides of the electronic device is extremely inconvenient to operate with two hands, and the size of the electronic product cannot be universal; rotating and buckling device requires precise alignment, and re-rotation is prone to errors, inconvenient to operate, and easy to loosen and fall.

### SUMMARY OF THE INVENTION

The technical problem to be solved by the invention is to provide an electronic product fixing device capable of fast buckling and picking to solve at least one of the above technical problems.

The invention is realized by the following technical solutions: An electronic product fixing device capable of fast buckling and picking, comprising a buckle clip, wherein the buckle clip comprises a housing, two movable buckles, a first spring, a transmission member, and a button; the movable buckles and the transmission member are movably installed in the housing; a clamping space for clamping a finger ring bracket is formed between the two movable buckles; the transmission member is perpendicular to one side edge of the movable buckles to form a slot with inclined guide surfaces on the left and right sides; the first end of the movable buckles matches the shape of the slot and can be stuck in the slot; the second end of each movable buckle is installed with a first spring; the first end of the transmission member parallel to the movable buckles is provided with a second spring; the second end of the transmission member parallel to the movable buckles is provided with the button, and the button is movably arranged in the mounting hole of the housing.

Preferably, the transmission member is rectangular; the middle part of the rectangle is a hollow structure, and a mounting screw is installed in the hollow structure.

Preferably, the housing comprises a buckle clip main body and a rear housing that are connected to each other; the front of the buckle clip main body is provided with a rectangular clamping cavity, and the shape of the clamping cavity is square.

Preferably, the button comprises a button body, a connecting column, and a clamping arm; one end of the connecting column is connected to the button body, and each of the two sides of the connecting column is provided with a clamping arm; the other end of the connecting column is connected to the transmission member; the inner end surface of the mounting hole is formed with a limit platform that mates with the free end of the clamping arm.

Preferably, the electronic product fixing device capable of fast buckling and picking further comprises a finger ring bracket; the finger ring bracket comprises an upper housing, a middle housing rotating disc, a base, and a finger ring; the upper housing, the middle housing rotating disc, and the base are arranged in order from top to bottom; the upper housing is riveted with the base; the middle housing rotating disk is rotatably sleeved on the outside of the base and is limited between the upper housing and the base; one side of the finger ring is pivotally connected to the middle housing rotating disc; the free end of the upper housing is detachably connected to the buckle clip through the two movable buckles.

Preferably, rivet holes are formed on the upper housing; one or more rivet columns for mating with the rivet holes are protrudingly formed on the upper surface of the base; a circular boss is formed on the base, and the rivet columns are arranged on the circular boss.

Preferably, the shape of the upper housing matches the shape of the clamping cavity; a buckle groove that matches with the movable buckles is formed on the circumferential end surface of the upper housing.

Preferably, a mounting body is protrudingly formed on one side of the middle housing rotating disc; a shaft hole is formed on the mounting body, and the shaft hole is provided with a shaft for connecting with the finger ring.

Preferably, a damping rubber ring is provided between the contact surface of the upper housing and the middle housing rotating disk.

Preferably, the electronic product fixing device capable of fast buckling and picking further comprises a fixing body for fixing the buckle clip, and the fixing body may be a bicycle clip body, an arm clip body, a car clip body, or a waist clip body.

Due to the above technology, the invention has multiple functions. For example, it can be used to buckle the mobile phone through the buckle groove of the finger ring bracket and the buckle clip of a bicycle clip, an arm clip, a car clip, or a waist clip during movement, which realizes convenient and simple operation, one-second stable hanging buckle and one-key easy picking; at the same time, in daily life, the finger ring bracket can also be used to hold the phone and put your fingers into the ring to prevent the phone from falling easily, and it can be rotated 360 degrees. The invention can also be used on the desktop to support the phone upright for easy viewing and release your hands.

### BRIEF DESCRIPTION OF THE DRAWINGS

In order to explain the embodiments of the invention or the technical solutions in the prior art more clearly, the drawings that need to be used in the description of the embodiments or the prior art will be introduced hereinafter. Obviously, the drawings in the following description are only some embodiments of the invention. For those of ordinary skill in the art, other drawings may be obtained from these drawings without creative efforts.
FIG. 1 schematically shows a schematic diagram of the buckle clip when applied to a bicycle clip;
FIG. 2 schematically shows a schematic diagram of the buckle clip when applied to an arm clip;
FIG. 3 schematically shows a schematic diagram of the buckle clip when applied to a waist clip;
FIG. 4 schematically shows a schematic diagram of the buckle clip when applied to a car clip;
FIG. 5 schematically shows a schematic diagram when the finger ring bracket is mounted to the bicycle clip;
FIG. 6 schematically shows an internal structure of the buckle clip;
FIG. 7 schematically shows a cross-sectional view of the buckle clip when mated with the finger ring bracket;
FIG. 8 schematically shows a perspective view of an embodiment of the bicycle clip;
FIG .9 schematically shows an exploded view of the buckle clip;
FIG. 10 schematically shows a structural diagram of the upper housing;
FIG. 11 schematically shows a structural diagram of the middle housing rotating disk;
FIG. 12 schematically shows a structural diagram of the base;
FIG. 13 schematically shows a structural diagram of the finger ring;
FIG. 14 schematically shows the assembly diagram of the upper housing and the middle housing rotating disk;
FIG .15 schematically shows a schematic diagram of FIG .14 after a cover plate is installed;
FIG. 16 schematically shows a schematic diagram of the state of use of the finger ring bracket;
FIG. 17 schematically shows a cross-sectional view of the finger ring bracket;
FIG. 18 schematically shows an exploded view of the finger ring bracket;
FIG. 19 schematically shows a schematic diagram of the installation of the finger ring bracket and the mobile phone;
FIG. 20 schematically shows a perspective view of an embodiment of the bicycle clip;
FIG. 21 schematically shows a perspective view of an embodiment of the arm clip;
FIG. 22 schematically shows a perspective view of an embodiment of the waist clip;
FIG. 23 schematically shows a perspective view of an embodiment of the car clip.

In the figures: 1 refers to the upper housing; 2 refers to the middle housing rotating disc; 3 refers to the base; 4 refers to the finger ring; 5 refers to the rivet hole; 6 refers to the rivet column; 7 refers to the buckle groove; 8 refers to the cover plate; 9 refers to the cover plate groove; 10 refers to the mounting hole; 11 refers to the shaft hole; 12 refers to the shaft; 13 refers to the shaft mounting hole; 14 refers to the damping rubber pipe; 15 refers to the damping rubber ring; 16 refers to the buckle clip; 17 refers to the housing; 18 refers to the movable buckle; 19 refers to the first spring; 20 refers to the clamping cavity; 21 refers to the bicycle clip body; 22 refers to the arm clip body; 23 refers to the car clip body; 24 refers to the waist clip body; 25 refers to the base receiving groove; 26 refers to the circular boss; 27 refers to the 3M glue; 28 refers to the nylon pad; 29 refers to the mobile phone; 30 refers to the transmission member; 31 refers to the button; 32 refers to the slot; 33 refers to the second spring; 34 refers to the mounting screw; 35 refers to the buckle clip body; 36 refers to the rear housing; 37 refers to the limit platform; 38 refers to the positioning adjustment gear ring; 39 refers to the button body; 40 refers to the connecting column; 41 refers to the clamping arm; 42 refers to the bicycle rod fixing device; 43 refers to the finger ring bracket.

### DETAILED DESCRIPTION OF THE PREFERRED EMBODIMENTS

All the features disclosed in the specification, or all disclosed methods or steps in the process, except for mutually exclusive features and/or steps, can be combined in any manner.

Any feature disclosed in the specification (including any appended claims, abstract and drawings), unless specifically stated, can be replaced by other equivalent or equivalent alternative features. That is, unless otherwise stated, each feature is just one example of a series of equivalent or similar features.

In the description of the invention, it needs to be understood that the orientation or positional relationship indicated by the terms "one end", "the other end", "outer", "upper", "inner", "horizontal", "coaxial", "center", "end", "length", "outer end", etc. are based on the orientation or positional relationship shown in the drawings, which are only for the convenience of describing the invention and simplifying the description, rather than indicating or implying that the device or element referred to must have a specific orientation, be constructed and operated in a specific orientation, and therefore cannot be understood as a limitation of the invention.

In addition, in the description of the invention, "plurality" means at least two, such as two, three, etc., unless otherwise specifically defined.

The terms such as "upper", "above", "lower", "below" and the like used in the invention to indicate a relative position in space are used to describe the relationship of one unit or feature relative to another unit or feature as shown in the drawings for the purpose of facilitating explanation. The term of the relative position in space may be intended to include different orientations of the device in use or operation other than those shown in the figures. For example, if the device in the figure is turned over, the unit described as being "lower" or "below" other units or features will be "above" the other units or features. Therefore, the exemplary term "below" can encompass both above and below orientations. A device can be oriented in other ways (rotated by 90 degrees or other orientations), and the space-related descriptors used in this article are explained accordingly

In the invention, unless otherwise clearly defined and limited, the terms "provided", "sleeved", "connected", "through", "plug" and other terms should be interpreted broadly; for example, it can be a fixed connection, it can be a detachable connection, or integrated; it can be a mechanical connection or an electrical connection; it can be a direct connection, or an indirectly connection through an intermediate medium, and it can be an internal communication between two elements or the interaction relationship between two elements, unless specifically defined otherwise. For those of ordinary skill in the art, the specific meaning of the above terms in the invention can be understood according to specific circumstances.

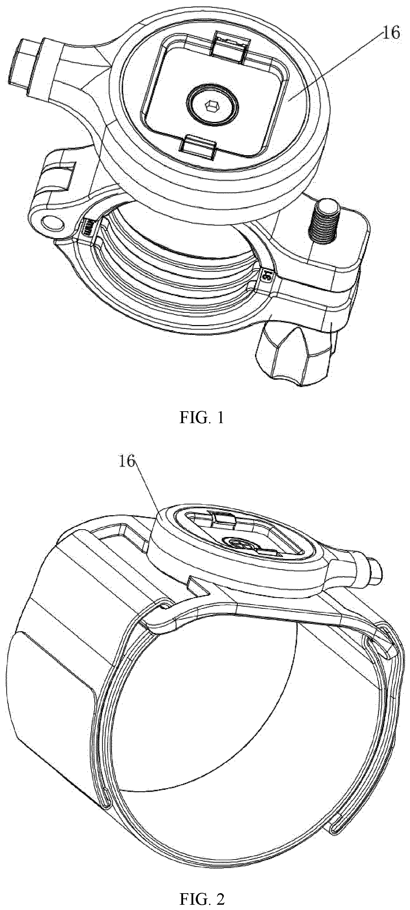

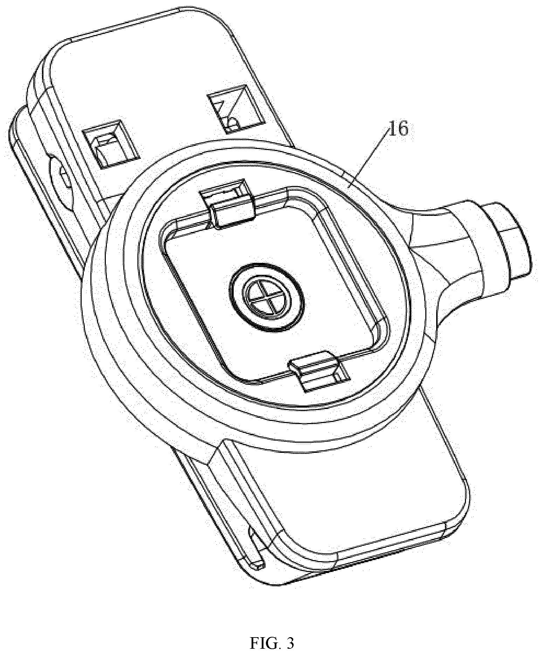

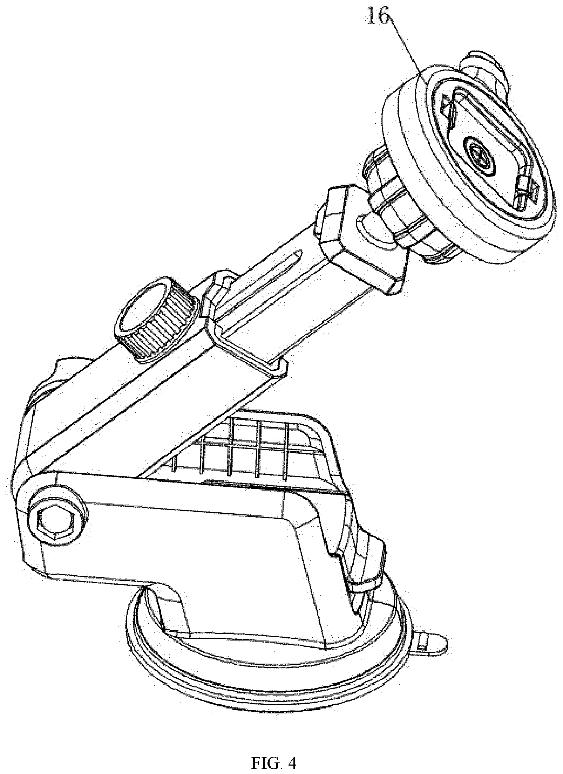

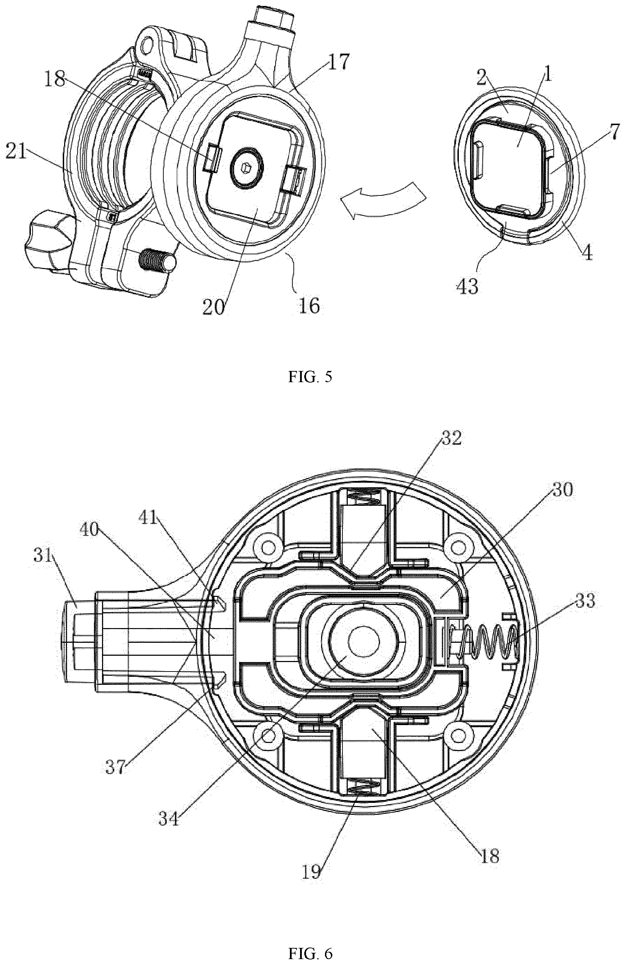

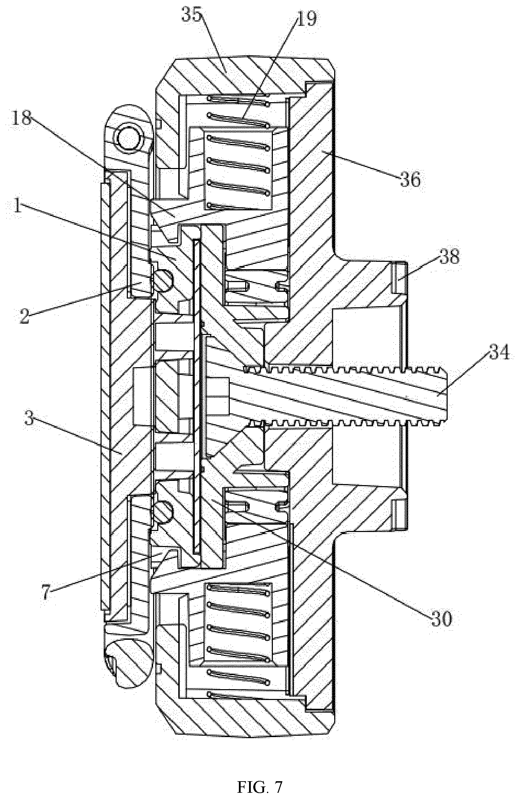

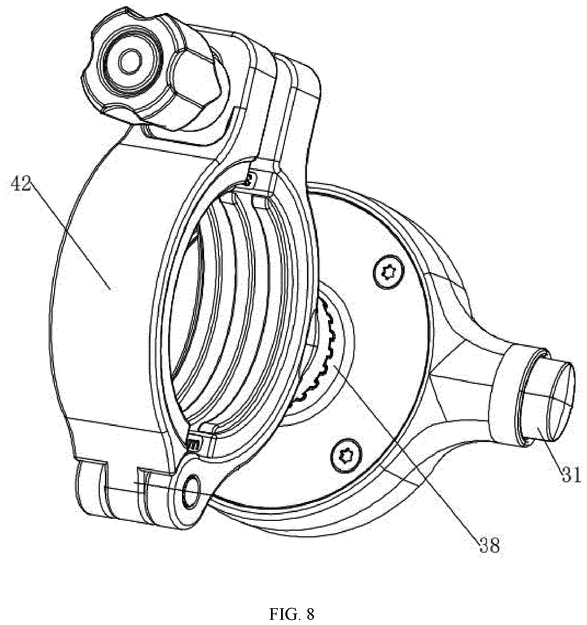

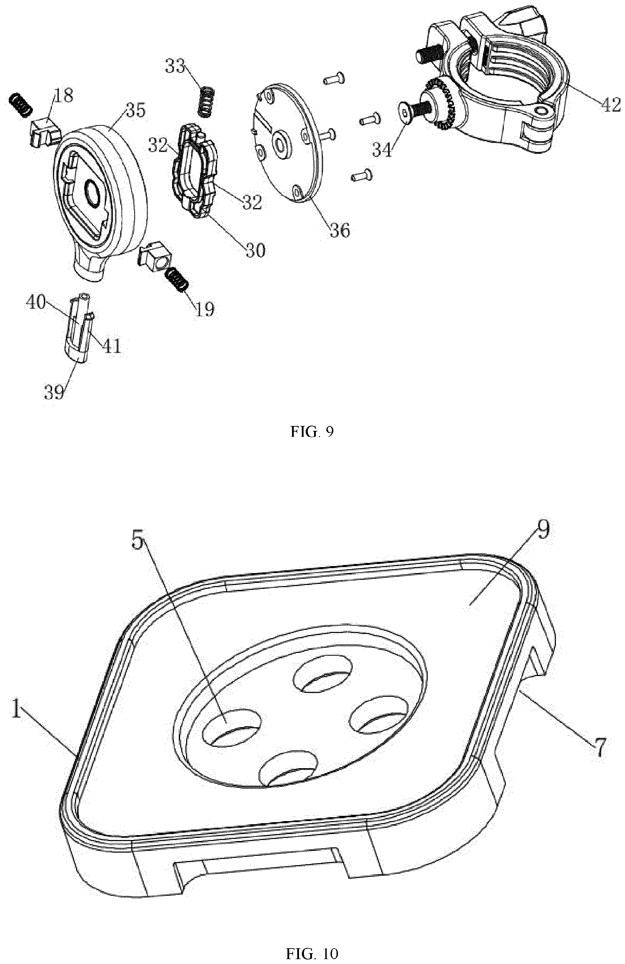

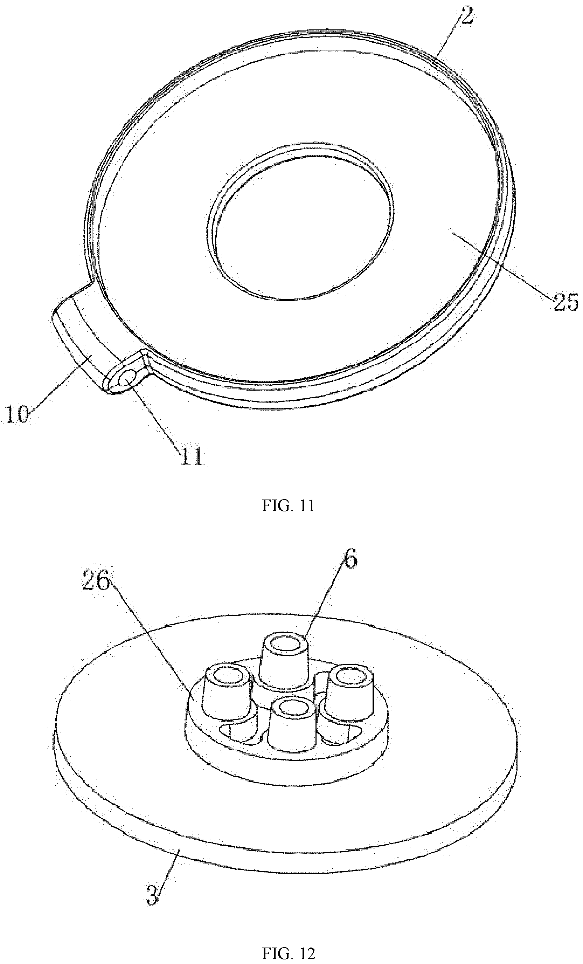

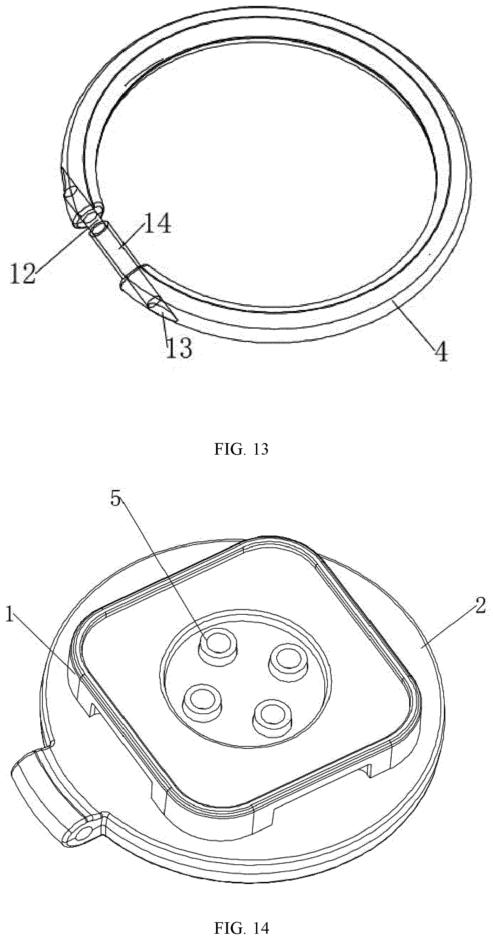

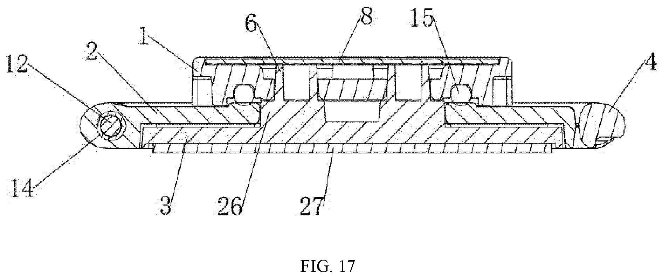

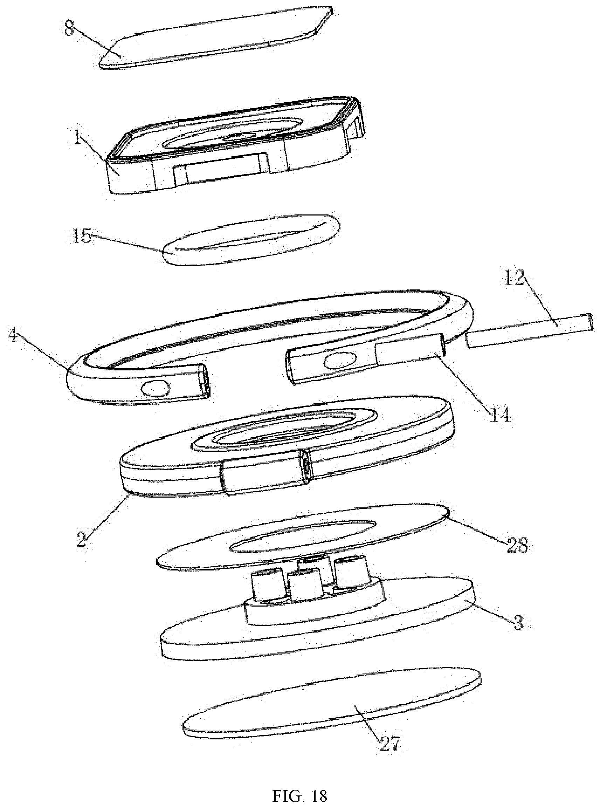

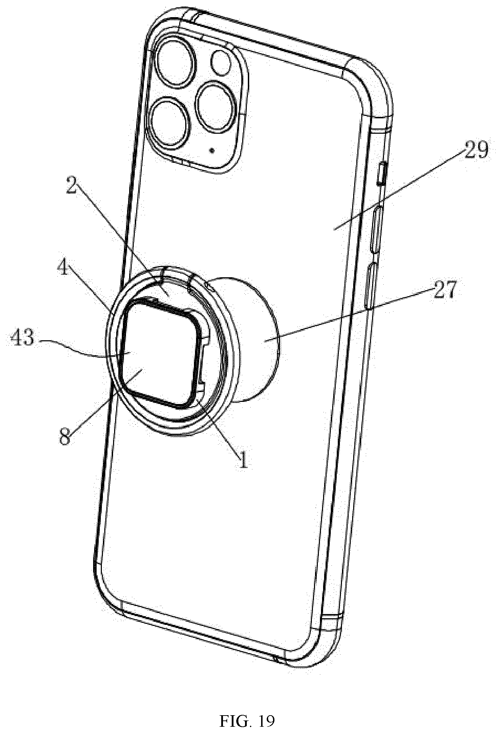

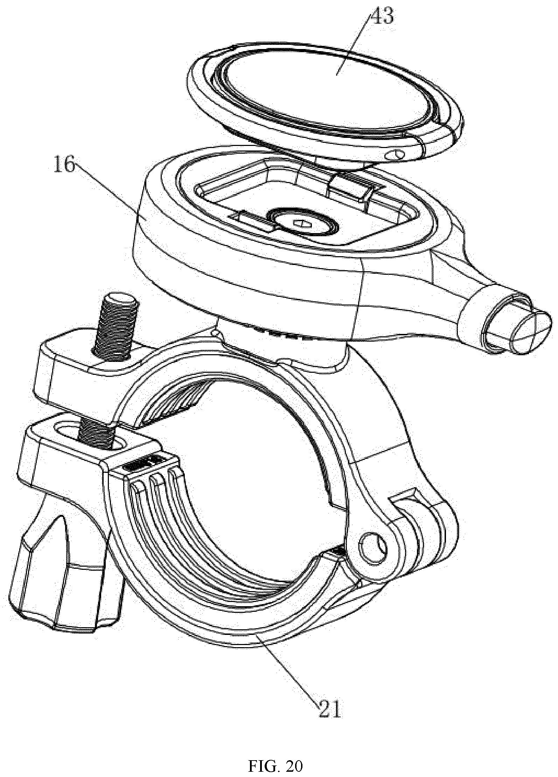

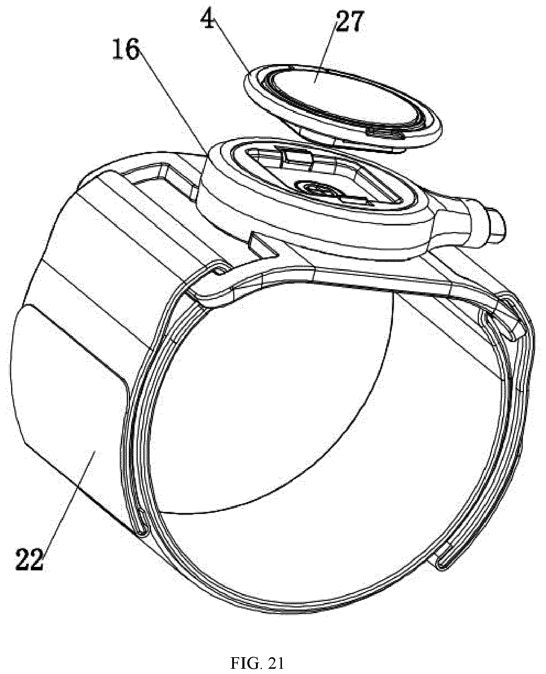

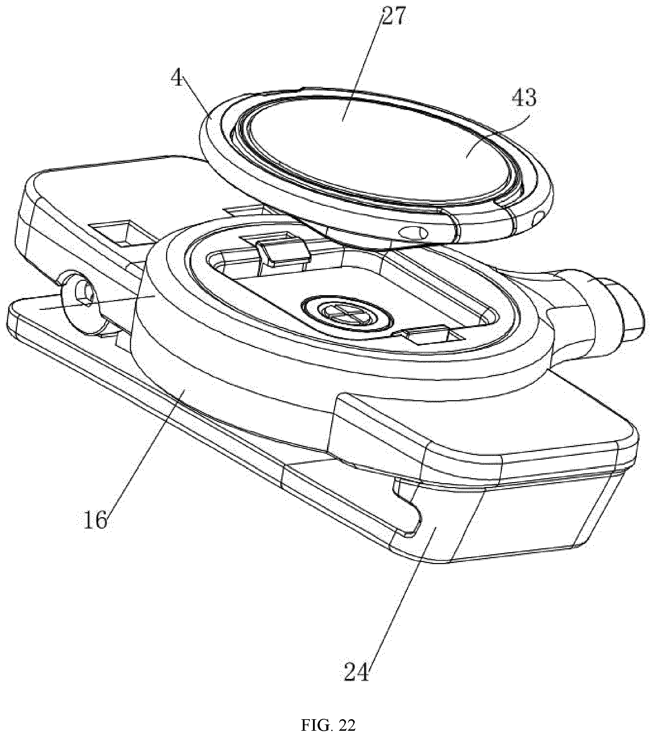

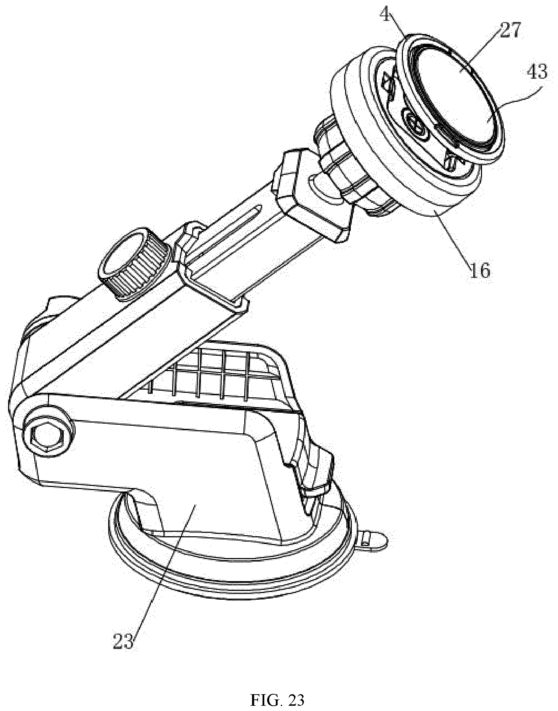

As shown in FIG. 1-23, the electronic product fixing device capable of fast buckling and picking of the invention, comprising a buckle clip 16, wherein the buckle clip 16 comprises a housing 17, two movable buckles 18, a first spring 19, a transmission member 30, and a button 31; the movable buckles 18 and the transmission member 30 are movably installed in the housing 17; a clamping space for clamping a finger ring bracket 43 is formed between the two movable buckles 18; the transmission member 30 is perpendicular to one side edge of the movable buckles 18 to form a slot 32 with inclined guide surfaces on the left and right sides; the first end of the movable buckles 18 matches the shape of the slot 32 and can be stuck in the slot 32; the second end of each movable buckle 18 is installed with a first spring 19; the first end of the transmission member 30 parallel to the movable buckles 18 is provided with a second spring 30; the second end of the transmission member 30 parallel to the movable buckles 18 is provided with the button 31, and the button 31 is movably arranged in the mounting hole of the housing 17.

Preferably, the electronic product fixing device capable of fast buckling and picking further comprises a finger ring bracket 43; the finger ring bracket 43 comprises an upper housing 1, a middle housing rotating disc 2, a base 3, and a finger ring 4; the upper housing 1, the middle housing rotating disc 2, and the base 3 are arranged in order from top to bottom; the upper housing 1 is riveted with the base 3; the middle housing rotating disk 2 is rotatably sleeved on the outside of the base 3 and is limited between the upper housing 1 and the base 3; one side of the finger ring 4 is pivotally connected to the middle housing rotating disc 2; the free end of the upper housing 1 is detachably connected to the buckle clip 16 through the two movable buckles 18. The 3M glue 27 is attached to the back of the base 3 for connection with mobile phones and other devices.

Preferably, the housing 17 comprises a buckle clip main body 35 and a rear housing 36 that are connected to each other; the front of the buckle clip main body 35 is provided with a rectangular clamping cavity 20. The free end of the upper housing 1 matches the shape of the clamping cavity 20, and at least a pair of buckle grooves 7 are formed on the free end of the upper housing 1; the bottom surface of the rear housing 36 is provided with a positioning adjusting gear ring 38. The positioning adjusting gear ring 38 mates with the gear ring on the object to be fixed such as the bicycle rod fixing device 42, and the angle of the buckle clip 16 can be conveniently adjusted. The buckle grooves 7 are preferably two pairs, and the two pairs of buckle grooves 7 are arranged orthogonally to facilitate the angle adjustment and selection during installation, and to facilitate users' different application scenarios. Preferably, the shape of the clamping cavity 20 is square; preferably, the shape of the upper housing 1 is square. Preferably, the top of the movable buckles and the top of the peripheral edge of the clamping cavity both have oblique angles, and the oblique angles guide facilitates the assembly and buckling of the upper housing of the finger ring bracket.

When in use, the free end of the upper housing 1 is detachably connected to the buckle clip 16 through the two movable buckles 18. When the upper housing 1 is inserted into the clamping cavity 20, the movable buckles 18 will be squeezed to make it move outward; when it is inserted in place, under the action of the first spring 19, the movable buckles 18 retract inwardly, thereby buckling into the buckle groove 7, so that the finger ring bracket 43 is fixed to the buckle clip 16. Preferably, the second end surface of the movable buckles 18 is provided with a circular sink groove, and one end of the first spring 19 is installed in the circular sink groove; the other end of the first spring 19 is squeezed and pre-tensioned with the inner wall of the housing to form a force pushing the movable buckles 18 inward, that is, the movable buckles 18 are reset and closed.

When the upper housing 1 is assembled into the clamping cavity 20 of the buckle clip main body 35, the side wall of the square boss on the upper housing 1 pushes the buckle chamfers of the two movable buckles 18 on the buckle clip main body 35 so that the two movable buckles 18 expand and move outward; after the upper housing 1 is inserted into the bottom of the clamping cavity 20, the two movable buckles 18 of the buckle clip main body 35 are reset under the action of the first spring 19, so that the movable buckles 18 and the buckle groove 7 form a buckling, locking and stopping state; both the movable buckles 18 and the finger ring bracket 43 of the buckle clip main body 35 are made of hardware materials, so they can withstand great pulling force without failing.

When the button 31 is pressed, the transmission member 30 is driven to move; the inclined guide surfaces on the left and right sides of the slot 32 of the transmission member 30 squeeze the matching inclined surfaces on the left and right sides of the movable buckles 18, thereby pushing the movable buckles 18 to move outward to open; at this time, the movable buckles 18 are separated from the buckle groove 7 of the finger ring bracket 43, and the mobile phone can be removed by hand and separated from the buckle clip main body 35. The second spring 33 presses against the inner wall of the buckle clip main body 35 to form a force toward the side of the button 31, so that after the button 31 is released, the button 31 can be quickly reset, thereby realizing fast buckling and picking.

Preferably, the transmission member 30 is rectangular; the middle part of the rectangle is a hollow structure, and a mounting screw 34 is installed in the hollow structure. In the process of pressing the button 31, the hollow structure and the mounting screw 34 form a guiding structure, so that the transmission member 30 moves in a predetermined direction; meanwhile, the mounting screw 34 also serves to fix the buckle clip 16 to the fixing object such as the bicycle rod fixing device 42; at the same time, the design of the hollow structure also forms an installation avoidance space for the mounting screw 34, which is beneficial to reduce the volume and thickness.

Preferably, the button 31 comprises a button body 39, a connecting column 40, and a clamping arm 41; one end of the connecting column 40 is connected to the button body 39, and each of the two sides of the connecting column 40 is provided with a clamping arm 41; the other end of the connecting column 40 is connected to the transmission member 30; the inner end surface of the mounting hole is formed with a limit platform 42 that mates with the free end of the clamping arm 41; the clamping arm 41 plays a dual role of guiding and limiting the reset position of the button 31.

Preferably, rivet holes 5 are formed on the upper housing 1; one or more rivet columns 6 for mating with the rivet holes 5 are protrudingly formed on the upper surface of the base 3; a circular boss 26 is formed on the base 3, and the rivet columns 6 are arranged on the circular boss 26.

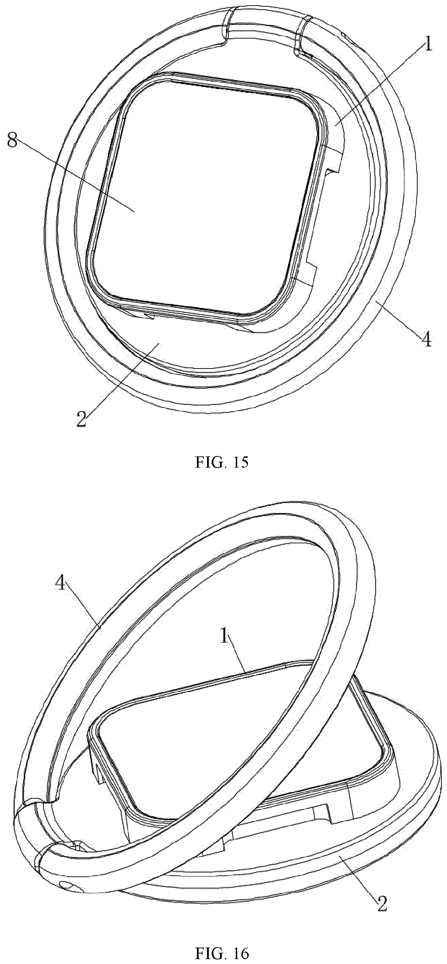

When in use, the base 3 is attached to the back of the mobile phone 29 through the 3M glue 27; since the upper housing 1 and the base 3 are riveted together, the middle housing rotating disk 2 sandwiched between the two is fixed, and the middle housing rotating disc 2 can rotate around the circular boss 26; therefore, when the finger ring 4 is changed from the circular boss 26 to the state shown in FIG. 16, when the user inserts the finger on the finger ring 4, the circumferential position of the finger ring 4 can be adjusted to meet the requirements of different usage conditions.

A damping rubber pipe 14 is installed on the rotating shaft at the side opening of the finger ring 4 to support the mobile phone at different angles to achieve a damping effect when it rotates 180 degrees in the horizontal direction with the rotating shaft as the center. The surface of the upper housing 1 is provided with a damping rubber ring receiving groove, the upper housing 1 and the base 3 are riveted and fixed, and the middle housing rotating disk 2 is rotatably connected between the upper housing 1 and the base 3. In order to adjust the friction between the upper housing 1 and the base 3 when the middle housing rotating disk 2 rotates 360 degrees, it is necessary to install a damping rubber ring 15 in the damping rubber ring receiving groove of the upper housing 1 to increase the resistance, which can achieve the damping effect during rotation.

Preferably, a buckle groove 7 that matches with the movable buckles 18 is formed on the circumferential end surface of the upper housing 1 for connecting with the buckle clip 16.

Preferably, the upper surface of the upper housing 1 is formed with a cover plate groove 9 for installing the cover plate 8. For example, the cover plate 8 is a mirror plate, which is used to prevent the rivets thereof from being exposed to affect the appearance of the entire product.

Preferably, a mounting body 10 is protrudingly formed on one side of the middle housing rotating disc 2; a shaft hole 11 is formed on the mounting body 10, and the shaft hole 11 is provided with a shaft 12 for connecting with the finger ring 4. Preferably, the finger ring 4 is C-shaped, and two ends of the C-shape are formed with shaft mounting holes 13 for mounting the shaft 12. In this way, the C-shaped finger ring 4 is clamped to the outside of the circular mounting body 10, and can be folded or opened. Further preferably, a damping rubber pipe 14 is sleeved on the shaft 12. Preferably, a damping rubber ring 15 is provided between the contact surface of the upper housing 1 and the middle housing rotating disk 2. The two damping rings can increase the frictional force when the finger ring 4 and the middle housing rotating disk 2 rotate, and it is easier to keep the position and state of the two stable during the movement.

Preferably, the electronic product fixing device capable of fast buckling and picking further comprises a fixing body for fixing the buckle clip 16, and the fixing body may be a bicycle clip body 21, an arm clip body 22, a car clip body 2, or a waist clip body 24. In this way, the invention is pasted on the mobile phone or mobile phone protective casing through the 3M glue of the base; the four side buckle grooves of the upper housing are used to buckle with the movable buckles of the buckle clip of the bicycle clip, the arm clip, the car clip, or the waist clip to realize convenient and simple operation, one-second stable buckle and easy removal with one button; at the same time, in daily life, the finger ring bracket can also be used to hold the phone and put your fingers into the ring to prevent the phone from falling easily, and it can be rotated 360 degrees. The invention can also be used on the desktop to support the phone upright for easy viewing and release your hands, which greatly increases the good consumer experience.

Due to the above technology, the invention has multiple functions. For example, it can be used to buckle the mobile phone through the buckle groove of the finger ring bracket and the buckle clip of a bicycle clip, an arm clip, a car clip, or a waist clip during movement, which realizes convenient and simple operation, one-second stable hanging buckle and one-key easy picking; at the same time, in daily life, the finger ring bracket can also be used to hold the phone and put your fingers into the ring to prevent the phone from falling easily, and it can be rotated 360 degrees. The invention can also be used on the desktop to support the phone upright for easy viewing and release your hands.

The above are only specific embodiments of the invention, but the protection scope of the invention is not limited thereto. Any modifications or substitutions creative efforts shall all fall within protection scope of the invention. Therefore, the protection scope of the invention should be subject to the protection scope defined by the claims.

## Claims

1. An electronic product fixing device capable of fast buckling and picking, comprising a buckle clip (16), wherein the buckle clip (16) comprises a housing (17), two movable buckles (18), a first spring (19), a transmission member (30), and a button (31); the movable buckles (18) and the transmission member (30) are movably installed in the housing (17); a clamping space for clamping a finger ring bracket (43) is formed between the two movable buckles (18); the transmission member (30) is perpendicular to one side edge of the movable buckles (18) to form a slot (32) with inclined guide surfaces on the left and right sides; the first end of the movable buckles (18) matches the shape of the slot (32) and can be stuck in the slot (32); the second end of each movable buckle (18) is installed with a first spring (19); the first end of the transmission member (30) parallel to the movable buckles (18) is provided with a second spring (30); the second end of the transmission member (30) parallel to the movable buckles (18) is provided with the button (31), and the button (31) is movably arranged in the mounting hole of the housing (17).

2. The electronic product fixing device capable of fast buckling and picking according to claim 1, wherein the transmission member (30) is rectangular; the middle part of the rectangle is a hollow structure, and a mounting screw (34) is installed in the hollow structure.

3. The electronic product fixing device capable of fast buckling and picking according to claim 1, wherein the housing (17) comprises a buckle clip main body (35) and a rear housing (36) that are connected to each other; the front of the buckle clip main body (35) is provided with a rectangular clamping cavity (20), and the shape of the clamping cavity (20) is square.

4. The electronic product fixing device capable of fast buckling and picking according to claim 1, wherein the button (31) comprises a button body (39), a connecting column (40), and a clamping arm (41); one end of the connecting column (40) is connected to the button body (39), and each of the two sides of the connecting column (40) is provided with a clamping arm (41); the other end of the connecting column (40) is connected to the transmission member (30); the inner end surface of the mounting hole is formed with a limit platform (42) that mates with the free end of the clamping arm (41).

5. The electronic product fixing device capable of fast buckling and picking according to claim 1, wherein the electronic product fixing device capable of fast buckling and picking further comprises a finger ring bracket (43); the finger ring bracket (43) comprises an upper housing (1), a middle housing rotating disc (2), a base (3), and a finger ring (4); the upper housing (1), the middle housing rotating disc (2), and the base (3) are arranged in order from top to bottom; the upper housing (1) is riveted with the base (3); the middle housing rotating disk (2) is rotatably sleeved on the outside of the base (3) and is limited between the upper housing (1) and the base (3); one side of the finger ring (4) is pivotally connected to the middle housing rotating disc (2); the free end of the upper housing (1) is detachably connected to the buckle clip (16) through the two movable buckles (18).

6. The electronic product fixing device capable of fast buckling and picking according to claim 5, wherein rivet holes (5) are formed on the upper housing (1); one or more rivet columns (6) for mating with the rivet holes (5) are protrudingly formed on the upper surface of the base (3); a circular boss (26) is formed on the base (3), and the rivet columns (6) are arranged on the circular boss (26).

7. The electronic product fixing device capable of fast buckling and picking according to claim 5, wherein the shape of the upper housing (1) matches the shape of the clamping cavity (20); a buckle groove (7) that matches with the movable buckles (18) is formed on the circumferential end surface of the upper housing (1).

8. The electronic product fixing device capable of fast buckling and picking according to claim 6, wherein a mounting body (10) is protrudingly formed on one side of the middle housing rotating disc (2); a shaft hole (11) is formed on the mounting body (10), and the shaft hole (11) is provided with a shaft (12) for connecting with the finger ring (4).

9. The electronic product fixing device capable of fast buckling and picking according to claim 5 , wherein a damping rubber ring (15) is provided between the contact surface of the upper housing (1) and the middle housing rotating disk (2).

10. The electronic product fixing device capable of fast buckling and picking according to claim 5, wherein the electronic product fixing device capable of fast buckling and picking further comprises a fixing body for fixing the buckle clip (16), and the fixing body may be a bicycle clip body (21), an arm clip body (22), a car clip body (23), or a waist clip body (24).
